# EUROPEAN PATENT APPLICATION

(11) **EP 4 722 579 A1**
(43) Date of publication of application: **08.04.2026**
(21) Application number: 24810078.6
(22) Date of filing: 16.04.2024
(51) Int. Cl.: F16M 11/24, G03B 17/56

(54) **CONNECTING-PLATE-TYPE SUPPORTING ROD MECHANISM OF TRIPOD**

(30) Priority: 25.05.2023 CN 202310602424
(71) Applicant: Ningbo Yizhou Machinery Co., Ltd., Ningbo, Zhejiang 315000 (CN)
(72) Inventor: LU, Weiming, Ningbo, Zhejiang 315000 (CN)
(74) Representative: Vitina, Maruta
(86) International application number: PCT/CN2024/087962
(87) International publication number: WO 2024/239831

(57) **Abstract**

A connecting-plate-type support mechanism of a tripod, including a connecting component, three support leg assemblies and a center column. An outer circumference of the center column is provided with at least one raised rib or groove. An inner side of each support leg assembly is provided with a leg brace. An end of an outer leg tube of each support leg assembly is provided with a locking wrench socket. A side of the locking wrench socket is provided with a protrusion, on which an external articulation base is provided. One end of the leg brace is fixed on an inner side of the outer leg tube through the external articulation base. An outer circumference of a connecting sleeve is provided with an inner articulation base corresponding to the protrusion. The other end of the leg brace is articulated with a side of the inner articulation base.

## Description

### TECHNICAL FIELD

This application relates to tripods, and more particularly to a connecting-plate-type support mechanism for a tripod.

### BACKGROUND

A tripod generally consists of a main frame, three legs, and a tripod head. Some tripods additionally have multi-section auxiliary legs at each leg and a lifting center column. The tripod is mainly designed to fix photographic equipment, such as cameras and video cameras, adjust angles and heights of the photographic equipment, or be used as a holder together with a phone holder or a selfie light. For some of the existing tripods, the center column is designed to have a convex triangular prism structure, so as to enhance the lifting stability, and prevent the undesired rotation during use. Chinese Patent No. 211502194U (patented on September 15, 2020), proposes a triangular prism-shaped center column and a tripod equipped therewith. Chinese Patent No. 212987134U (patented on April 16, 2021) discloses a tripod structure and a tripod light. Currently, some similar products adopt a U-shaped steel wire leg-bracing mechanism to further enhance stability of the tripod after it is deployed. However, the combined use of the center column and the leg-bracing mechanism has been less reported in the prior art. Moreover, it has also been rarely reported about the leg brace with a strip-shaped connecting plate structure which can be hidden after being collapsed, as well as the leg brace with an eccentric deploying/collapsing design. The existing products struggles with the following defects: poor stability of support legs after deployed, and relatively large space occupation after collapsed.

### SUMMARY

In order to overcome the above deficiencies, this application provides a connecting-plate-type support mechanism of a tripod to solve the problems that spread legs are less likely to adopt a structure form of a strip-shaped connecting plate which can be hidden after being folded, and the spread legs are also less likely to adopt a structure form of folding and opening at an eccentric side, resulting in poor stability of support legs after opening and relatively large occupied space of the support legs after folded. Technical solutions of the present disclosure are described as follows.

A connecting-plate-type support mechanism of a tripod, comprising:
a connecting component;
three support leg assemblies; and
a center column;
wherein the three support leg assemblies are provided at an outer circumference of the connecting component; a first end of each of the three support leg assemblies is fixedly articulated with the connecting component; each of the three support leg assemblies comprises an outer leg tube, and a first end of the outer leg tube is fixedly articulated with the connecting component through an articulation sleeve;
a center of the connecting component is provided with the center column; the center column is configured to extend from a bottom of the connecting component, and is fixed to the connecting component; an outer circumference at a side of the center column is provided with at least one raised rib or at least one groove; an inner side of a second end of each of the three support leg assemblies is provided with a leg brace; a first end of the leg brace is fixedly articulated with an inner side of the outer leg tube, and a second end of the leg brace is fixedly articulated with an outer circumference of a connecting sleeve; an inner side of a central hole of the connecting sleeve is provided with a guiding groove or a guiding rib configured to slidably fit the at least one raised rib or at least one groove; a second end of the outer leg tube is provided with a locking wrench socket or a foot sleeve; a side of the locking wrench socket or the foot sleeve is provided with a protrusion, and an external articulation base is provided on a top or an inner side of the protrusion; the first end of the leg brace is fixed to the inner side of the outer leg tube of each through the external articulation base; the outer circumference of the connecting sleeve is provided with an inner articulation base corresponding to the protrusion; the second end of the leg brace is fixedly articulated with a side of the connecting sleeve that is provided with the inner articulation base; the leg brace is configured to be deployed and collapsed in a single-side eccentric spiral manner; and
in response to a case that the three support leg assemblies are collapsed, the leg brace is configured to nest in a gap of a side between adjacent outer leg tubes;
such above structure is set through the leg brace is configured to be deployed and collapsed in the single-side eccentric spiral manner, which facilitates that the leg brace is configured to nest the gap of the side between adjacent outer leg tubes after collapsed; and according to the prior art, the at least one raised rib and the at least one raised groove provided on the outer circumference at the side of the center column can be omitted, but will reduce its stability during use.

In an embodiment, the leg brace is a connecting plate in a strip shape, and the connecting plate is made of metal or plastic. Described above is specific structure of the leg brace, which facilitates use of the connecting plate in a vertical state.

In an embodiment, the connecting plate is arranged vertically; and two ends of the connecting plate are fixedly articulated with the locking wrench socket and the inner articulation base through pins. Such structure of the connecting plate can better ensure that the connecting plate is hidden after collapsed, facilitating production and assembly of the connecting plate.

In an embodiment, the connecting plate is arranged transversely; and two ends of the connecting plate are fixedly articulated with the locking wrench socket and the inner articulation base through hook fasteners or snap fasteners, respectively. Such structure of the connecting plate can meet above requirements only by adjusting the connecting plate to a smaller width.

In an embodiment, a cross-section of the outer leg tube is rectangular, trapezoidal, round or rhombic. A shape of the outer leg tube is not limited to this, and tubes with other shapes can be adopted. The outer leg tube only needs to meet a gap reserved between adjacent outer leg tubes after the three support leg assemblies are collapsed, or the gap between adjacent outer leg tubes after the three support leg assemblies are collapsed is reserved through a difference between an outer circumference of the locking wrench socket and a circumference of the outer leg tube.

In an embodiment, the center column is in a triangular prism shape with a protruding outer circumference. The central hole of the connecting sleeve is configured to fit the center column. The inner articulation base is arranged on a protrusion at an outer circumference of the central hole. Such structure of the center column is in a triangular prism shape, enhancing stability of the center column, preventing swing of the mechanism when it is deployed and in use, and improving stability of up and down movement of the connecting sleeve. According to the prior art, the center column can also adopt a shape of an existing tube with a protrusion or irregular shape on one side.

In an embodiment, a center of the central hole is provided with a round hole, and the round hole is provided with a curved protrusion corresponding to a space between adjacent lateral edges of the center column. Such center column in the triangular prism shape with an irregular shape further enhances strength of the center column, so as to improve its service life.

In an embodiment, a bottom end of the center column is fixedly provided with a limit block, and the limit block is configured to limit the center column to the connecting component during upward movement of the center column. Such structure effectively prevents the center column from being detached from a top of the connecting component, or prevents the connecting sleeve from sliding off the center column through the limit block, which further enhances stability of the connecting sleeve.

In an embodiment, an upper anti-rotation slot is provided on a connection between a first end of the connecting plate and the connecting sleeve, and a lower anti-rotation slot is provided on a connection between a second end of the connecting plate and the external articulation base. Such structure can better utilize a limit structure on two ends of the connecting plate to limit deployment and collapse use of the connecting plate.

In an embodiment, a side of the center column that provided with the connecting sleeve is provided with a locking wrench or a locking button, and the connecting sleeve is fixed on the center column through the locking wrench or the locking button. Such structure facilitates fixing the connecting sleeve to a specified position on the center column through the locking wrench or the locking button, which further enhances stability of the three support leg assemblies after being deployed and stability of the limit block. The locking wrench is designed as long as it does not interfere enclosure of the mechanism.

The present disclosure has a reasonable structural design, good stability, a wide range of applications, and diverse structures, especially the connecting plate, as the leg brace, has a small occupied space after being collapsed. The present disclosure is suitable for use as the connecting-plate-type support mechanism of the tripod, and also for structural improvement applicable to similar products.

### BRIEF DESCRIPTION OF THE DRAWINGS

Fig. 1 is a structural diagram of a connecting-plate-type support mechanism in a deployed state according to an embodiment of the present disclosure.
Fig. 2 is a structural diagram of the connecting-plate-type support mechanism in a collapsed state according to an embodiment of the present disclosure.
Fig. 3 is a sectional diagram of Fig.2, where a limit block is shown.
Fig. 4 is a structural diagram of a support leg assembly in Fig. 2.
Fig. 5 is a structural diagram of an internal structure of the connecting-plate-type support mechanism in Fig. 2 with one support leg assembly omitted, where a locking wrench is shown.
Fig. 6 is a structural diagram of the connecting-plate-type support mechanism in Fig. 5 with three support leg assemblies and a connecting component omitted.
Fig. 7 is a top view of the connecting-plate-type support mechanism in a deployed state in Fig. 6, where a center column is omitted.
Fig. 8 is a structural diagram of the connecting plate in Fig. 1 with improvement in one end.
Fig. 9 is another structural diagram of the connecting plate in Fig. 1 with improvement in one end.

In figures: 1, connecting plate; 101, hook fastener; 102, snap fastener; 2, connecting sleeve; 201, inner articulation base; 3, center column; 4, support leg assembly; 401, outer leg tube; 402, articulation sleeve; 403, locking wrench socket; 4031, external articulation base; 5, connecting component; 6, limit block; and 7, locking wrench.

### DETAILED DESCRIPTION OF EMBODIMENTS

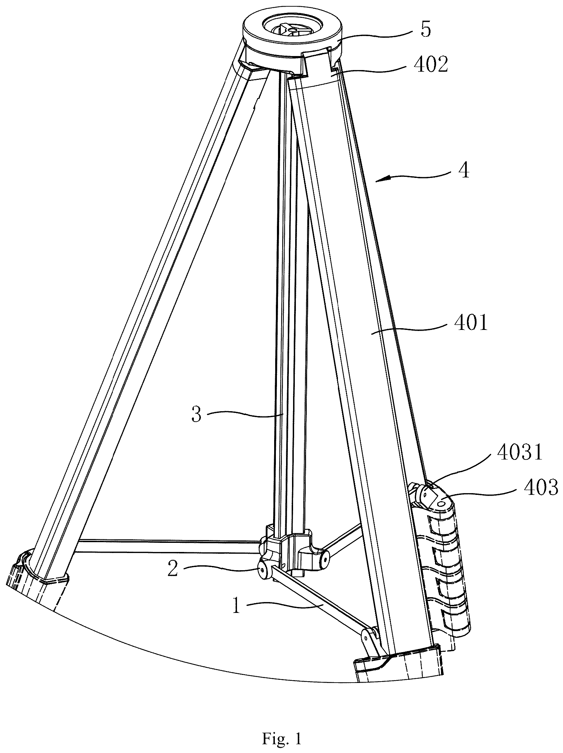

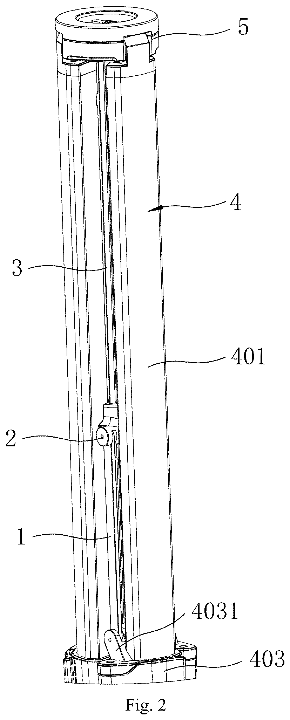

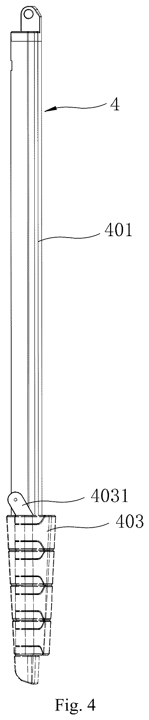

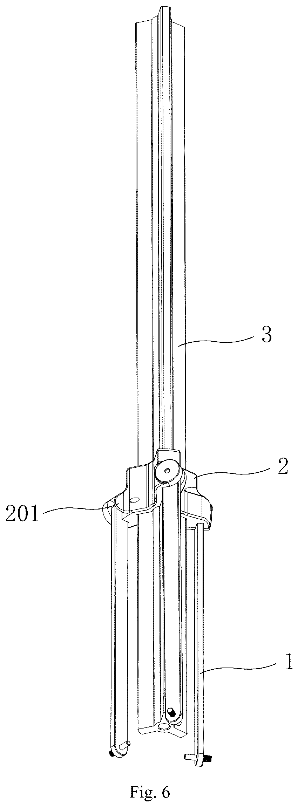

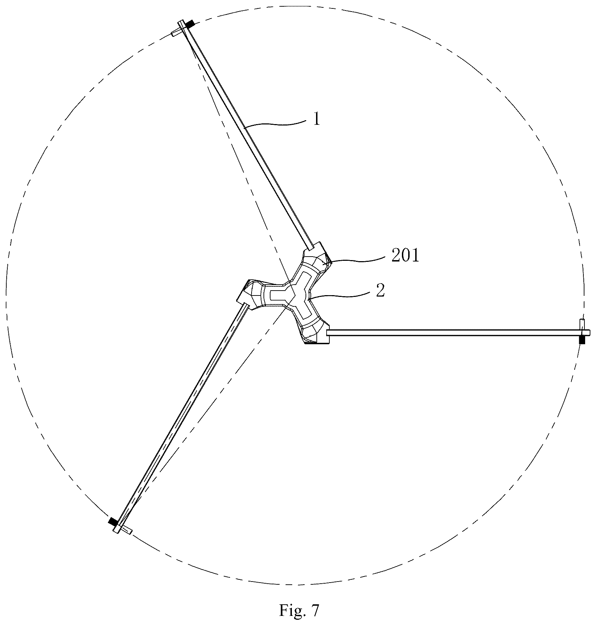

A structure and use of the present disclosure are further described with reference to the accompanying drawings. Referring to Figs. 1-7, a connecting-plate-type support mechanism of a tripod includes a connecting component 5, three support leg assemblies 4 and a center column 3. The three support leg assemblies 4 are provided at an outer circumference of the connecting component 5. A first end of each of the three support leg assemblies 4 is fixedly articulated with the connecting component 5. Each of the three support leg assemblies 4 includes an outer leg tube 401, and a first end of the outer leg tube 401 is fixedly articulated with the connecting component 5 through an articulation sleeve 402. A center of the connecting component 5 is provided with the center column 3. The center column 3 is configured to extend from a bottom of the connecting component 5, and is fixed to the connecting component 5. The center column 3 is in a triangular prism shape with a protruding outer circumference. An inner side of a second end of each of the three support leg assemblies 4 is provided with a connecting plate 1, and the connecting plate 1 is in a strip shape. The connecting plate 1 is made of metal or plastic. A first end of the connecting plate 1 is fixedly articulated with an inner side of the outer leg tube 401 of each of the three support leg assemblies 4, and a second end of the connecting plate 1 is fixedly articulated with an outer circumference of a connecting sleeve 2. The connecting sleeve 2 includes a central hole. The central hole is configured to fit the center column 3, and the central hole is configured to correspondingly slide along the center column 3. A specific structure of the connecting-plate-type support mechanism is described as follows. A second end of the outer leg tube 401 is provided with a locking wrench socket 403. A side of the locking wrench socket 403 is provided with a protrusion, and an external articulation base 4031 is provided on a top of the protrusion. The first end of the connecting plate 1 is fixed to the inner side of the outer leg tube 401 of each of the three support leg assemblies 4 through the external articulation base 4031. The outer circumference of the connecting sleeve 2 is provided with an inner articulation base 201 corresponding to the protrusion. The second end of the connecting plate 1 is fixedly articulated with a side of the center column that provided with the connecting sleeve 2 that provided with the inner articulation base 201 corresponding to the protrusion. The three support leg assemblies 4 are configured to be deployed and collapsed in a single-side eccentric spiral manner. In response to a case that the three support leg assemblies 4 are collapsed, the connecting plate 1 is configured to nest in a gap of a side between adjacent outer leg tubes 401.

In an embodiment, the connecting plate 1 is arranged vertically. Two ends of the connecting plate 1 are fixedly articulated with the locking wrench socket 403 and the inner articulation base 201 through pins. A cross-section of the outer leg tube 401 is rectangular or trapezoidal, and the three support leg assemblies 4 and the center column 3 are provided with a telescoping tube with corresponding shape, respectively. A center of the round hole is provided with a round hole. The round hole is provided with a curved protrusion corresponding to a space between adjacent lateral edges of the center column 3.

In an embodiment, in response to a case that the three support leg assemblies 4 are deployed, respectively, the connecting sleeve 2 of the center column 3 is configured to move downward along with the three support leg assemblies 4, so as to deploy the connecting plate 1. In response to a case that the three support leg assemblies 4 are collapsed, the connecting sleeve 2 of the center column 3 is configured to move upward along with the three support leg assemblies 4 to collapse the connecting plate 1, and the connecting plate 1 is configured to nest in the gap of the side between adjacent outer leg tubes.

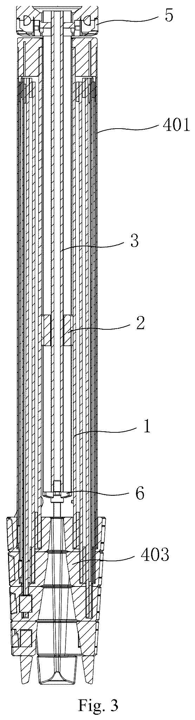

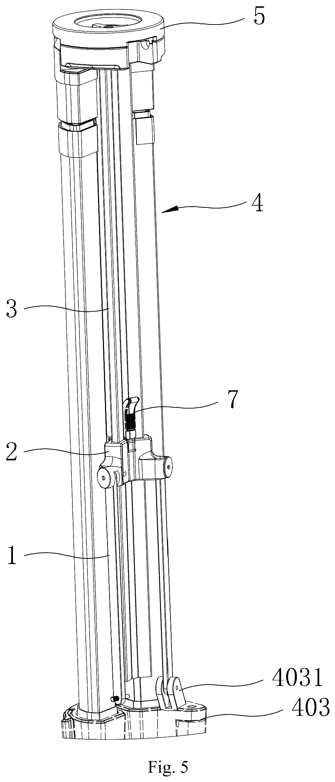

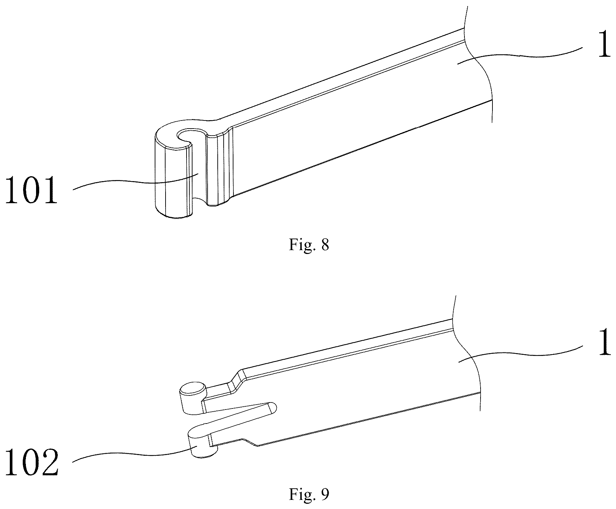

Based on above structural features, the connecting-plate-type support mechanism can also be improved as follows. Referring to Fig. 3, a bottom end of the center column 3 is fixedly provided with a limit block 6, and the limit block 6 is configured to limit the center column 3 to the connecting component 5 during upward movement of the center column 3. At the same time, in the above structure, an upper anti-rotation slot is provided on a connection between the first end of the connecting plate 1 and the connecting sleeve 2, and a lower anti-rotation slot is provided on a connection between a second end of the connecting plate 1 and the external articulation base 4031. In this way, the connecting plate 1 is configured to perform a further limit effect during deployment and collapse. Referring to Fig. 5, a side of the center column that provided with the connecting sleeve 2 is provided with a locking wrench 7 or a locking button, and the connecting sleeve 2 is fixed on the center column 3 through the locking wrench 7 or the locking button. Referring to Figs. 8-9, the connecting plate 1 is arranged transversely, and two ends of the connecting plate 1 are fixedly articulated with the locking wrench socket 403 and the inner articulation base 201 through hook fasteners 101 or snap fasteners 102, respectively.

## Claims

1. A connecting-plate-type support mechanism of a tripod, comprising:
a connecting component (5);
three support leg assemblies (4); and
a center column (3);
**characterized in that** the three support leg assemblies (4) are provided at an outer circumference of the connecting component (5); a first end of each of the three support leg assemblies (4) is fixedly articulated with the connecting component (5); each of the three support leg assemblies (4) comprises an outer leg tube (401), and a first end of the outer leg tube (401) is fixedly articulated with the connecting component (5) through an articulation sleeve (402);
a center of the connecting component (5) is provided with the center column (3); the center column (3) is configured to extend from a bottom of the connecting component (5), and is fixed to the connecting component (5); an outer circumference at a side of the center column (3) is provided with at least one raised rib or at least one groove; an inner side of a second end of each of the three support leg assemblies (4) is provided with a leg brace; a first end of the leg brace is fixedly articulated with an inner side of the outer leg tube (401), and a second end of the leg brace is fixedly articulated with an outer circumference of a connecting sleeve (2); an inner side of a central hole of the connecting sleeve (2) is provided with a guiding groove or a guiding rib configured to slidably fit the at least one raised rib or at least one groove;
a second end of the outer leg tube (401) is provided with a locking wrench socket (403) or a foot sleeve; a side of the locking wrench socket (403) or the foot sleeve is provided with a protrusion, and an external articulation base (4031) is provided on a top or an inner side of the protrusion; the first end of the leg brace is fixed to the inner side of the outer leg tube (401) through the external articulation base (4031); the outer circumference of the connecting sleeve (2) is provided with an inner articulation base (201) corresponding to the protrusion; the second end of the leg brace is fixedly articulated with a side of the connecting sleeve (2) that is provided with the inner articulation base (201); the leg brace is configured to be deployed and collapsed in a single-side eccentric spiral manner; and
in response to a case that the three support leg assemblies (4) are collapsed, the leg brace is configured to nest in a gap of a side between adjacent outer leg tubes (401).

2. The connecting-plate-type support mechanism of claim 1, **characterized in that** the leg brace is a connecting plate (1) in a strip shape, and the connecting plate (1) is made of metal or plastic.

3. The connecting-plate-type support mechanism of claim 2, **characterized in that** the connecting plate (1) is arranged vertically; and two ends of the connecting plate (1) are fixedly articulated with the locking wrench socket (403) and the inner articulation base (201) through pins, respectively.

4. The connecting-plate-type support mechanism of claim 2, **characterized in that** the connecting plate (1) is arranged transversely; and two ends of the connecting plate (1) are fixedly articulated with the locking wrench socket (403) and the inner articulation base (201) through hook fasteners (101) or snap fasteners (102), respectively.

5. The connecting-plate-type support mechanism of claim 2, **characterized in that** a cross-section of the outer leg tube (401) is rectangular, trapezoidal, round or rhombic.

6. The connecting-plate-type support mechanism of claim 1, **characterized in that** the center column (3) is in a triangular prism shape with a protruding outer circumference; the central hole of the connecting sleeve (2) is configured to fit the center column (3); and the inner articulation base (201) is arranged on a protrusion at an outer circumference of the central hole.

7. The connecting-plate-type support mechanism of claim 6, **characterized in that** a center of the central hole is provided with a round hole, and the round hole is provided with a curved protrusion corresponding to a space between adjacent lateral edges of the center column (3).

8. The connecting-plate-type support mechanism of claim 1, **characterized in that** a bottom end of the center column (3) is fixedly provided with a limit block (6), and the limit block (6) is configured to limit the center column (3) to the connecting component (5) during upward movement of the center column (3).

9. The connecting-plate-type support mechanism of claim 1, **characterized in that** an upper anti-rotation slot is provided on a connection between a first end of the connecting plate (1) and the connecting sleeve (2), and a lower anti-rotation slot is provided on a connection between a second end of the connecting plate (1) and the external articulation base (4031).

10. The connecting-plate-type support mechanism of claim 1, **characterized in that** a side of the center column (3) that provided with the connecting sleeve (2) is provided with a locking wrench (7) or a locking button, and the connecting sleeve (2) is fixed on the center column (3) through the locking wrench (7) or the locking button.
